# EUROPEAN PATENT SPECIFICATION

(11) **EP 2 400 228 B1**
(45) Date of publication and mention of the grant of the patent: **10.12.2014**
(21) Application number: 10006570.5
(22) Date of filing: 24.06.2010
(51) Int. Cl.: F24D 19/10

(54) **Control valve for hydronic installations**
Regelventil für wärmeübertragende Installationen
Vanne de contrôle pour installations hydroniques

(43) Date of publication of application: 28.12.2011
(73) Proprietor: Honeywell Technologies Sarl, 1180 Rolle (CH)
(72) Inventor: Fadrny, Petr, 678 00 Blansko (CZ); Borastero, Ivan, 683 01 Rousinov (CZ); Sanders, Bernhard, 59755 Arnsberg (DE)
(74) Representative: Sturm, Christoph

(56) References cited:
- WO-A1-2004/029571
- WO-A1-2006/031161
- WO-A1-2009/132658

## Description

The invention relates to a control valve assembly for hydronic installations as defined in the preamble of claim 1.

In hydronic heating or cooling installations, for example in two-pipe heating systems, a hydronic medium tempered by a heat exchanger, for example by a heating boiler, is provided to heating or cooling devices, for example to heating radiators, through at least one supply pipe, whereby the hydronic medium is returned back from the heating or cooling devices to the heat exchanger by at least one return pipe. It is necessary to provide a defined flow within the heating or cooling installation and to provide a defined pressure differential between the supply pipe and the return pipe. This is a significant requirement for an efficient operation of a hydronic heating or cooling installation.

In order to provide a defined flow within the heating or cooling installation, a so-called double regulating balancing valve (DRV valve) is used and installed e.g. in the supply pipe of the hydronic installations. In order to provide a defined pressure differential between the supply pipe and the return pipe of the heating or cooling installation, a so-called differential pressure control valve (DPC valve) is used and installed between the supply pipe and the return pipe of the hydronic installation. The double regulating balancing valve and the differential pressure control valve are both control valves of the hydronic installation. The present invention relates to such hydronic control valves.

Control valves for hydronic installations known from practical use comprise a valve housing and a valve plunger. The valve housing provides a valve inlet, a valve outlet and a valve seat. The valve plunger is acting together with the valve seat provided by the valve housing, whereby the control valve is closed when the valve plunger is pressed against the valve seat, and whereby the control valve is opened when the valve plunger is lifted up from the valve seat.

Control valves for hydronic installations known from practical use further comprise pressure test valves (PT valves) being assigned to the valve housing for measuring the pressure within the valve inlet and/or for measuring the pressure within the valve outlet of the valve housing. Usually, a control valve for hydronic installations comprises two pressure test valves, namely a first pressure test valve assigned to the valve inlet for measuring the pressure within the valve inlet and a second pressure test valve assigned to the valve outlet for measuring the pressure within the valve outlet. From the pressure difference between the pressure within the valve inlet and the pressure within the valve outlet it is possible to determine the flow rate through the control valve.

The pressure test valves are connected with the valve housing of a control valve for hydronic installations through connection terminals. The connection of the pressure test valves to said connection terminals is quite complex for control valves known from practical use. Tools are required for the connection of the pressure test valves.

A control valve assembly for hydronic installations according to the preamble of claim 1 is known from WO 2004/029571 A1. Other prior art control valve assemblies are disclosed in WO 2009/132658 A1 and WO 2006/031161 A1.

Against this background, a novel control valve assembly for hydronic installations according to claims 1 is provided allowing an easy connection of the pressure test valves to the valve housing of the control valve.

According to a preferred embodiment of the invention the first part and the second part of each pressure test valve each comprise an outer housing providing a cavity in which a movable sealing pin and a spring element are positioned, said spring elements each provide a spring force which tends to press the respective sealing pin against a sealing seat provided in the cavity of the respective housing.

When the first part and the second part of a pressure test valve are disconnected, the spring elements of the first and second parts press the respective sealing pin against the respective sealing seat.

When an end of the first part of a pressure test valve becomes inserted into an end of the respective second part of the pressure test valve in order to connect the first part and the second part, the sealing pins of the parts are first still pressed against their sealing seats by the respective spring element, whereby a sealing element assigned to the end of the second part seals against the adjacent end of the first part being inserted into the end of the second part, and whereby thereafter adjacent ends of the sealing pins come into contact with each other.

When the first part of the pressure test valve becomes further inserted into the respective second part of the pressure test valve, the sealing pins of both parts are moved against the spring force provided by the respective spring element thereby lifting up the sealing pins from the sealing seats and thereby allowing the flow of the hydronic medium from the first part into the second part of the respective pressure test valve. With the continued insertion of the first part into the second part a locking element assigned to the second part of the respective pressure test valve overcomes a shoulder on an exterior surface of the housing of the first part and enters subsequently into a recess on the exterior surface of the housing of the first part thereby clicking together the first part and the second part of the respective pressure test valve.

Preferred developments of the invention are provided by the dependent claims and the description which follows. Exemplary embodiments are explained in more detail on the basis of the drawing, in which:

| | |
|---|---|
| Figure 1 | shows a cross sectional view of a control valve assembly for hydronic installations; |
| Figure 2 | shows a first part of a pressure test valve of such a control valve assembly; |
| Figure 3 | shows a second part of a pressure test valve of such a control valve assembly; |
| Figure 4 | shows the first part of Figure 2 together with the second part of Figure 3, whereby a second end of said first part is partly inserted into a first end of the second part; and |
| Figure 5 | shows the first part of Figure 2 together with the second part of Figure 3, whereby the second end of said first part is completely inserted into the first end of the second part thereby clicking the first part and the second part together. |

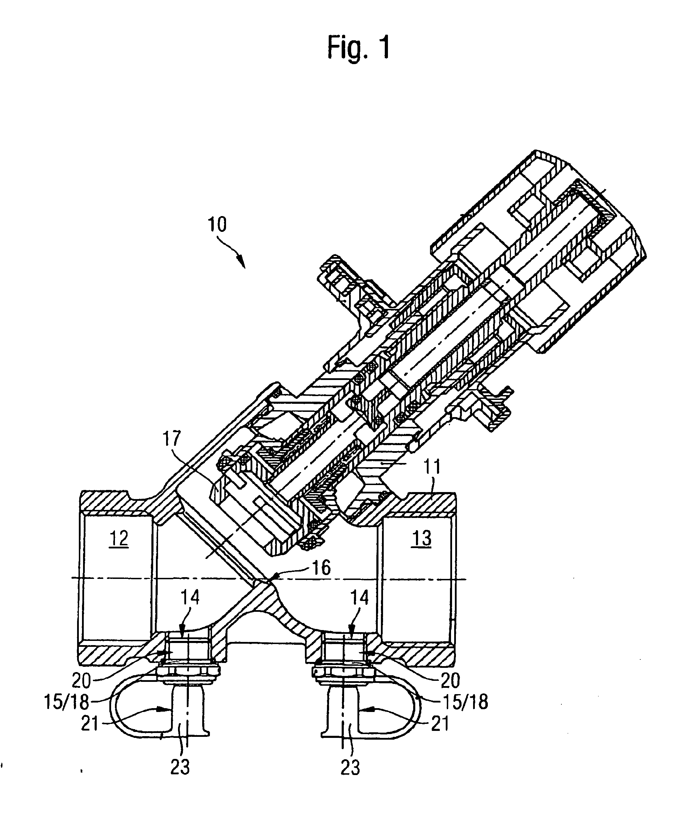

The present invention relates to a control valve for hydronic heating or cooling installations, especially to a differential pressure control valve or a double regulating balancing valve. Figure 1 shows a cross section through such a control valve 10, namely through a double regulating balancing valve. The principle functionality of such a differential pressure control valve or a double regulating balancing valve is known to the person skilled in the art.

The control valve 10 comprises a valve housing 11. The valve housing 11 comprises a valve inlet 12, a valve outlet 13 and connection terminals 14 for pressure test valves 15. Said valve inlet 12 and valve outlet 13 of the valve housing 11 are connectable into at least one pipe of a hydronic installation.

The valve housing 11 provides a valve seat 16. A valve plunger 17 acts together with the valve seat 16. The control valve 10 is closed when the valve plunger 17 is pressed against the valve seat 16. The control valve 10 is opened when the valve plunger 17 is lifted up from the valve seat 16.

As mentioned above, pressure test valves 15 are assigned to the control valve 10. A first pressure test valve 15 is assigned to the valve inlet 12 for measuring the pressure within the valve inlet 12 and a second pressure test valve 15 is assigned to the valve outlet 13 for measuring the pressure within the valve outlet 13. From the pressure difference between the pressure within the valve inlet 12 and the pressure within the valve outlet 13 it is possible to determine the flow rate through the control valve 10. The pressure test valves 15 are inserted in the connection terminals 14 of the valve housing 11 of the control valve 10.

Each pressure test valve 15 comprises a first part 18 being partly inserted in and partly positioned within the respective connection terminal 14 of the valve housing 11 and a second part 19 being connectable to the first part 18 by clicking together the first part 18 and the second part 19 of the respective pressure test valve 15. No tools are required to connect both parts 18 and 19 together. The invention provides a control valve 10 for hydronic installations having pressure test valves 15 which can be connected in a quick and easy way by simply clicking together the second part 19 to the first part 18 the respective pressure test valve 15.

The first part 18 of each pressure test valve 15 comprises a first end 20 being positioned inside the respective connection terminal 14 and a second end 21 being positioned inside a first end 22 of the respective second part 19 of the pressure test valve 15 when the first part 18 and the second part 19 of the pressure test valves 15 are clicked together. The first part 18 of each pressure test valve 15 can also be called male part and the second part 19 of each pressure test valve 15 can also be called female part. Figure 1 shows only the first/male parts 18 of the pressure test valves 15 being inserted with their first ends 20 into the respective connection terminal 14. The second ends 21 of said first parts 18 of the pressure test valves 15 are in Figure 1 covered by a protection cap 23.

The first part 18 and the second part 19 of each pressure test valve 15 each comprise an outer housing 24, 25 providing a cavity 26, 27 in which a movable sealing pin 28, 29 and a spring element 30, 31 are positioned. Said spring elements 30, 31 each provide a spring force which tends to press the respective sealing pin 28, 29 against a sealing seat 32, 33 provided in the cavity 26, 27 of the respective housing 24, 25.

The sealing seats 32, 33 are provided by a conical contour or a chamfer of the respective cavities 26, 27.

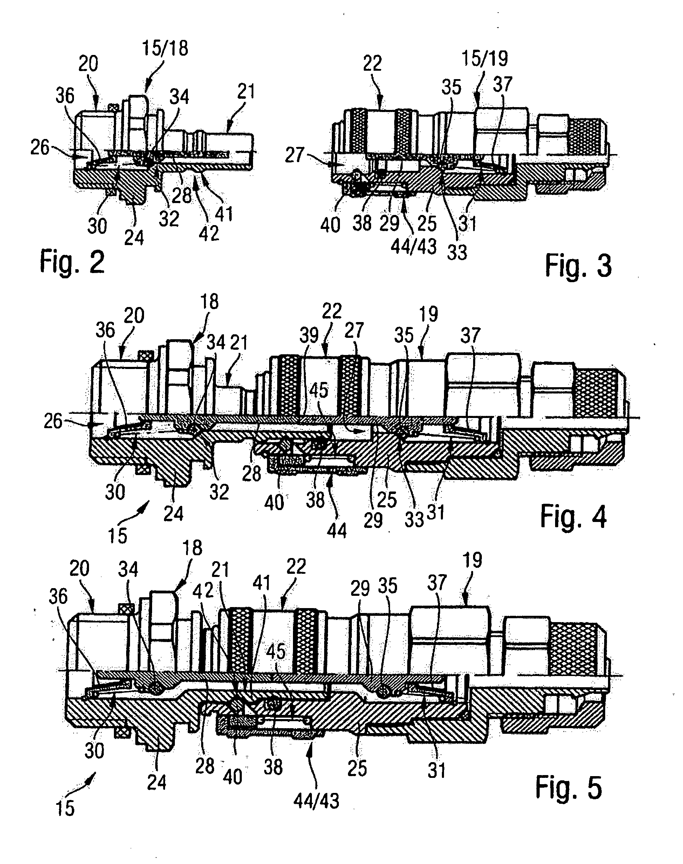

As shown in Figures 2 to 5, each sealing pin 28, 29 carries a sealing element 34, 35 which is pressed against the respective sealing seat 32, 33 by the respective spring element 30, 31. Said sealing elements 34, 35 are provided by O-Rings.

The sealing pins 28, 29 of the first part 18 and the second part 19 of each pressure test valve 15 are guided by supporting means 36, 37 allowing a relative movement between the supporting means 36, 37 and the sealing pin 28, 29 of the respective part 18, 19 of the respective pressure test valve 15. The supporting means 36, 37 allow a flow of the hydronic medium through the same.

When the first part 18 and the second part 19 of a pressure test valve 15 (see Figures 2 and 3) are disconnected, the spring elements 30, 31 of the first and second parts 18, 19 press the respective sealing pin 28, 29, namely the sealing element 34, 35 carried by the same, against the respective sealing seat 32, 33.

When the first part 18 and the second part 19 of a pressure test valve 15 (see Figure 4) are to be connected, the second end 21 of the first part 18 of a pressure test valve 15 becomes inserted into the first end 22 of the respective second part 19 of the pressure test valve 15. At the beginning of this insertion, the sealing pins 28, 29 of the parts 18, 19 are still pressed against their sealing seats 32, 33 by the respective spring element 30, 31. A sealing element 38 assigned to the first end 22 of the second part 19 seals against the second end 21 of the first part 18 being inserted into the first end 22 of the second part 19. Said sealing element 38 is provided by an O-Ring. Adjacent ends 39 of the sealing pins 28, 29 come into contact.

With the further insertion of the first part 18 into the respective second part 19 the sealing pins 28, 29 of both parts 18, 19 are moved against the spring force provided by the respective spring element 30, 31 thereby lifting up the sealing pins 28, 29 from the sealing seats 32, 33 and thereby allowing the flow of the hydronic medium from the first part into the second part of the respective pressure test valve 15 (see Figure 5).

With the further continued insertion of the first part 18 into the respective second part 19 of the pressure test valve 15 a locking element 40 assigned to the second part 19 of the respective pressure test valve 15 overcomes a shoulder 41 on an exterior surface of the housing 24 of the first part 18 and enters subsequently into a recess 42 on the exterior surface of the housing 24 of the first part 18 thereby clicking together the first part 18 and the second part 19 of the respective pressure test valve 15.

Both parts 18, 19 of the pressure test valve can be disconnected by an unlocking mechanism 43 comprising a handle 44 and a spring 45. By moving said handle 44 against the spring force of said spring 45 the locking element 40 can be released thereby allowing the disconnection of both parts 18, 19 by moving the second end 21 of the first part 18 out of the first end 22 of the second part 19. During this disconnection the spring elements 30, 31 of both parts 18, 19 tend to press the sealing pins 28, 29 or sealing elements 34, 35 carried by the same against the sealing seats 32, 33. The sealing pins 28, 29 or sealing elements 34, 35 carried by the same are pressed against the sealing seats 32, 33 before the sealing between the two parts 18, 19 provided by the sealing element 38 is discontinued.

The connection between the two parts 18, 19 is secure and sealed. During the connection and disconnection leakage of the hydronic medium is prevented.

The cavities 26, 27 and sealing pins 28, 29 of the parts 18, 19 have a smooth profile or shape being free of undercuts or the like. Particles which may be contained in the hydronic medium can not be stored within the cavities 26, 27 when connecting and disconnecting both parts 18, 19. During connection and disconnection of both parts 18, 19 all such articles are flushed away.

In connection with this flushing effect it is of importance that a difference between an inner diameter of the cavities 26, 27 and the outer diameter of the sealing pins 28, 29 is larger than the size of the particles which may be contained in the hydronic medium. This diameter difference defining a gap between the inner diameter of the cavities 26, 27 and the outer diameter of the sealing pins 28, 29 is preferably larger than 0,2 mm. All particles can therefore be flushed away during connection and disconnection of both parts 18, 19.

During disconnection of both parts 18, 19 the gap between the sealing elements 34, 35 and the sealing seats 32, 33 provided by the conical contours or chamfers of the respective cavity 26, 27 decreases which results in an increase of the flow speed of the hydronic medium through this gap thereby flushing away all particles which may stuck on the sealing elements 34, 35 and/or the sealing seats 32, 33 and which may have a negative effect on the sealing quality.

### List of reference signs

- 10: control valve
- 11: valve housing
- 12: valve inlet
- 13: valve outlet
- 14: connection terminal
- 15: pressure test valve
- 16: valve seat
- 17: valve plunger
- 18: first part of pressure test valve
- 19: second part of pressure test valve
- 20: first end of first part of pressure test valve
- 21: second end of first part of pressure test valve
- 22: first end of second part of pressure test valve
- 23: protection cap
- 24: outer housing
- 25: outer housing
- 26: cavity
- 27: cavity
- 28: sealing pin
- 29: sealing pin
- 30: spring element
- 31: spring element
- 32: sealing seat
- 33: sealing seat
- 34: sealing element
- 35: sealing element
- 36: supporting means
- 37: supporting means
- 38: sealing element
- 39: end of sealing pin
- 40: locking element
- 41: shoulder
- 42: recess
- 43: unlocking mechanism
- 44: handle
- 45: spring

## Claims

1. Control valve assembly for hydronic installations, comprising:
a control valve, especially a differential pressure control valve or double regulating balancing valve, the control valve comprising a valve housing (11) providing a valve inlet (12), a valve outlet (13) and a valve seat (16), said valve inlet (12) and valve outlet (13) being connectable into at least one pipe of the hydronic installation; and a valve plunger (17) acting together with the valve seat (16), whereby the control valve is closed when the valve plunger (17) is pressed against the valve seat (16), and whereby the valve is opened when the valve plunger (17) is lifted up from the valve seat (16);
pressure test valves (15) being assigned to the valve housing (11) of the control valve for measuring the pressure within the valve inlet (12) and/or for measuring the pressure within the valve outlet (13) of the valve housing (11), whereby said pressure test valves (15) are connected with said valve housings (11) through connection terminals (14), and whereby each pressure test valve (15) comprises a first part (18) being partly inserted with a first end (20) in the respective connection terminal (14) of the valve housing (11);
wherein each pressure test valve (15) further comprises a second part (19) being connectable to the first part (18) by clicking together the first part (18) and the second part (19) of the respective pressure test valve in such a way that with the insertion of a second end (21) of the first part (18) into a first end (22) of the second part (19) a locking element (40) assigned to the second part (19) of the respective pressure test valve (15) overcomes a shoulder (41) on a exterior surface of a housing of the first part (18) and enters subsequently into a recess (42) on a exterior surface of the housing of the first part (18) thereby clicking together the first part (18) and the second part (19) of the respective pressure test valve (15);
**characterized in that**
the first part (18) and the second part (19) of each pressure test valve (15) each comprise an outer housing (24, 25) providing a cavity (26, 27) in which a movable sealing pin (28, 29) and a spring element (30, 31) are positioned, said spring elements each provide a spring force which tends to press the respective sealing pin against a sealing seat (32, 33) provided in the cavity of the respective housing, whereby when the second end (21) of the first part (18) of a pressure test valve (15) becomes inserted into the first end (22) of the respective second part (19) of the pressure test valve the sealing pins (28, 29) of the parts are pressed against their sealing seats (32, 33) by the respective spring element, and a sealing element (38) assigned to the first end of the second part (19) seals against the second end of the first part (18) being inserted into the first end of the second part (19), and adjacent ends (39) of the sealing pins come into contact, whereby with the further insertion of the first part (18) into the respective second part (19) the sealing pins (28, 29) of both parts are moveable against the spring force provided by the respective spring element (30, 31) thereby lifting up the sealing pins from the sealing seats and thereby allowing the flow of the hydronic medium from the first part into the second part of the respective pressure test valve (15);
the sealing pins (28, 29) of the first part (18) and the second part (19) of each pressure test valve (15) are guided by supporting means (36, 37) allowing a relative movement between the supporting means (36, 37) and the sealing pin (28, 29) of the respective part of the respective pressure test valve (15).

2. Control valve assembly as claimed in claim 1, **characterized in that** the sealing pins (28, 29) of the first part (18) and the second part (19) of each pressure test valve (15) carries a sealing element (34, 35) which is pressed against the respective sealing seat (32, 33) by the respective spring element (30, 31).

3. Control valve assembly as claimed in claim 1 or 2, **characterized by** an unlocking mechanism (43) comprising a handle (44) and a spring (45), whereby the locking element (40) can be released by moving said handle (44) against the spring force of said spring (45) thereby allowing the disconnection of the first part (18) and the second part (19).

4. Control valve assembly as claimed in one of claims 1 to 3, **characterized in that** the cavities (26, 27) and sealing pins (28, 29) of the parts (18, 19) have a smooth profile or shape.

5. Control valve assembly as claimed in one of claims 1 to 4, **characterized in that** a difference between an inner diameter of the cavities (26, 27) and an outer diameter of the sealing pins (28, 29) is larger than the size of the particles which may be contained in the hydronic medium.

6. Control valve assembly as claimed in claim 5, **characterized in that** the difference between the inner diameter of the cavities (26, 27) and the outer diameter of the sealing pins (28, 29) is larger than 0,2 mm.

## Patentansprüche

1. Steuerventilanordnung für Hydronic-Anlagen, die Folgendes umfasst:
ein Steuerventil, insbesondere ein Differenzdruck-Regelventil oder Strangregulier- und Absperrventil, wobei das Steuerventil umfasst: ein Ventilgehäuse (11), das einen Ventileingang (12), einen Ventilausgang (13) und einen Ventilsitz (16) bereitstellt, wobei der Ventileingang (12) und der Ventilausgang (13) an mindestens eine Leitung der Hydronic-Anlage anschließbar sind; und einen Ventilstößel (17), der zusammen mit dem Ventilsitz (16) wirkt, wobei das Steuerventil geschlossen ist, wenn der Ventilstößel (17) gegen den Ventilsitz (16) gepresst wird, und wobei das Ventil geöffnet ist, wenn der Ventilstößel (17) von dem Ventilsitz (16) angehoben ist;
Druckabfühlventile (15), die dem Ventilgehäuse (11) des Steuerventils zugeordnet sind, um den Druck innerhalb des Ventileingangs (12) zu messen und/oder um den Druck innerhalb des Ventilausgangs (13) des Ventilgehäuses (11) zu messen, wobei die Druckabfühlventile (15) mit den Ventilgehäusen (11) durch Verbindungsanschlüsse (14) verbunden sind und wobei jedes Druckabfühlventil (15) einen ersten Teil (18) umfasst, der teilweise mit einem ersten Ende (20) in den jeweiligen Verbindungsanschluss (14) des Ventilgehäuses (11) eingeführt ist;
wobei jedes Druckabfühlventil (15) ferner einen zweiten Teil (19) umfasst, der mit dem ersten Teil (18) verbindbar ist, indem der erste Teil (18) und der zweite Teil (19) des jeweiligen Druckabfühlventils derart zusammengeklickt werden, dass mit dem Einführen eines zweiten Endes (21) des ersten Teils (18) in ein erstes Ende (22) des zweiten Teils (19) ein Verriegelungselement (40), das dem zweiten Teil (19) des entsprechenden Druckabfühlventils (15) zugeordnet ist, eine Schulter (41) auf einer äußeren Fläche eines Gehäuses des ersten Teils (18) überwindet und anschließend in eine Aussparung (42) auf einer äußeren Fläche des Gehäuses des ersten Teils (18) eintritt, wodurch der erste Teil (18) und der zweite Teil (19) des entsprechenden Druckabfühlventils (15) zusammengeklickt werden; **dadurch gekennzeichnet, dass**
sowohl der erste Teil (18) als auch der zweite Teil (19) eines jeden Druckabfühlventils (15) ein äußeres Gehäuse (24, 25) umfassen, das einen Hohlraum (26, 27) bereitstellt, in dem ein beweglicher Dichtungsstift (28, 29) und ein Federelement (30, 31) positioniert sind, wobei jedes Federelement eine Federkraft liefert, die dazu neigt, den jeweiligen Dichtungsstift gegen einen Dichtungssitz (32, 33), der in dem Hohlraum des entsprechenden Gehäuses vorgesehen ist, zu pressen, wobei dann, wenn das zweite Ende (21) des ersten Teils (18) eines Druckabfühlventils (15) in das erste Ende (22) des jeweiligen zweiten Teils (19) des Druckabfühlventils eingefügt wird, die Dichtungsstifte (28, 29) der Teile durch das entsprechende Federelement gegen ihre Dichtungssitze (32, 33) gepresst werden, und ein Dichtungselement (38), das dem ersten Ende des zweiten Teils (19) zugeordnet ist, gegen das zweite Ende des ersten Teils (18), der in das erste Ende des zweiten Teils (19) eingefügt ist, dichtet, und benachbarte Enden (39) der Dichtungsstifte in Kontakt kommen, wobei mit der weiteren Einführung des ersten Teils (18) in den entsprechenden zweiten Teil (19) die Dichtungsstifte (28, 29) beider Teile gegen die durch das jeweilige Federelement (30, 31) gelieferte Federkraft beweglich sind, wodurch die Dichtungsstifte von den Dichtungssitzen angehoben werden und dadurch den Strom des Hydronic-Mediums von dem ersten Teil in den zweiten Teil des entsprechenden Druckabfühlventils (15) ermöglichen;
die Dichtungsstifte (28, 29) des ersten Teils (18) und des zweiten Teils (19) eines jeden Druckabfühlventils (15) durch Tragemittel (36, 37) geführt werden, die eine relative Bewegung zwischen den Tragemitteln (36, 37) und dem Dichtungsstift (28, 29) des jeweiligen Teils des entsprechenden Abfühlventils (15) ermöglichen.

2. Steuerventilanordnung nach Anspruch 1, **dadurch gekennzeichnet, dass** die Dichtungsstifte (28, 29) des ersten Teils (18) und des zweiten Teils (19) eines jeden Druckabfühlventils (15) ein Dichtungselement (34, 35) tragen, das durch das entsprechende Federelement (30, 31) gegen den entsprechenden Dichtungssitz (32, 33) gepresst wird.

3. Steuerventilanordnung nach Anspruch 1 oder 2, **gekennzeichnet durch** einen Entriegelungsmechanismus (43), der einen Griff (44) und eine Feder (45) umfasst, wobei das Verriegelungselement (40) **durch** Bewegen des Griffs (44) gegen die Federkraft der Feder (45) gelöst werden kann, wodurch die Trennung des ersten Teils (18) und des zweiten Teils (19) ermöglicht wird.

4. Steuerventilanordnung nach einem der Ansprüche 1 bis 3, **dadurch gekennzeichnet, dass** die Hohlräume (26, 27) und die Dichtungsstifte (28, 29) der Teile (18, 19) ein gleichmäßiges Profil oder eine gleichmäßige Form aufweisen.

5. Steuerventilanordnung nach einem der Ansprüche 1 bis 4, **dadurch gekennzeichnet, dass** ein Unterschied zwischen einem inneren Durchmesser der Hohlräume (26, 27) und einem äußeren Durchmesser der Dichtungsstifte (28, 29) größer als die Größe der Teilchen ist, die in dem Hydronic-Medium enthalten sein können.

6. Steuerventilanordnung nach Anspruch 5, **dadurch gekennzeichnet, dass** der Unterschied zwischen dem inneren Durchmesser der Hohlräume (26, 27) und dem äußeren Durchmesser der Dichtungsstifte (28, 29) größer als 0,2 mm ist.

## Revendications

1. Ensemble de soupape de commande pour installations hydroniques, comprenant :
une soupape de commande, en particulier une soupape de commande de pression différentielle ou une soupape d'équilibrage de régulation double, la soupape de commande comprenant un boîtier de soupape (11) présentant une entrée de soupape (12), une sortie de soupape (13) et un siège de soupape (16), ladite entrée de soupape (12) et ladite sortie de soupape (13) pouvant être raccordées dans au moins un tuyau de l'installation hydronique ; et un plongeur de soupape (17) coopérant avec le siège de soupape (16), la soupape de commande étant fermée lorsque le plongeur de soupape (17) est pressé contre le siège de soupape (16), et la soupape étant ouverte lorsque le plongeur de soupape (17) est soulevé du siège de soupape (16) ;
des soupapes de test de pression (15) étant affectées au boîtier de soupape (11) de la soupape de commande pour mesurer la pression à l'intérieur de l'entrée de soupape (12) et/ou pour mesurer la pression à l'intérieur de la sortie de soupape (13) du boîtier de soupape (11), lesdites soupapes de test de pression (15) étant raccordées audit boîtier de soupape (11) par le biais de bornes de connexion (14), et chaque soupape de test de pression (15) comprenant une première partie (18) partiellement insérée par une première extrémité (20) dans la borne de connexion respective (14) du boîtier de soupape (11) ;
chaque soupape de test de pression (15) comprenant en outre une deuxième partie (19) pouvant être raccordée à la première partie (18) par encliquetage de la première partie (18) et de la deuxième partie (19) de la soupape de test de pression respective de telle sorte que par l'insertion d'une deuxième extrémité (21) de la première partie (18) dans une première extrémité (22) de la deuxième partie (19), un élément de verrouillage (40) affecté à la deuxième partie (19) de la soupape de test de pression respective (15) surmonte un épaulement (41) sur une surface extérieure d'un boîtier de la première partie (18) et pénètre ensuite dans un retrait (42) sur une surface extérieure du boîtier de la première partie (18) pour ainsi encliqueter ensemble la première partie (18) et la deuxième partie (19) de la soupape de test de pression respective (15) ; **caractérisé en ce que**
la première partie (18) et la deuxième partie (19) de chaque soupape de test de pression (15) comprennent chacune un boîtier extérieur (24, 25) présentant une cavité (26, 27) dans laquelle une goupille d'étanchéité mobile (28, 29) et un élément de ressort (30, 31) sont positionnés, lesdits éléments de ressort fournissant chacun une force de ressort qui a tendance à presser la goupille d'étanchéité respective contre un siège d'étanchéité (32, 33) prévu dans la cavité du boîtier respectif, les goupilles d'étanchéité (28, 29) des parties, lorsque la deuxième extrémité (21) de la première partie (18) d'une soupape de test de pression (15) se trouve insérée dans la première extrémité (22) de la deuxième partie respective (19) de la soupape de test de pression, étant pressées contre leur siège d'étanchéité (32, 33) par l'élément de ressort respectif, et un élément d'étanchéité (38) affecté à la première extrémité de la deuxième partie (19) réalisant l'étanchéité contre la deuxième extrémité de la première partie (18) qui est insérée dans la première extrémité de la deuxième partie (19), et des extrémités adjacentes (39) des goupilles d'étanchéité venant en contact, les goupilles d'étanchéité (28, 29) des deux parties, avec l'insertion poursuivie de la première partie (18) dans la deuxième partie respective (19), pouvant être déplacées à l'encontre de la force de ressort fournie par l'élément de ressort respectif (30, 31) pour ainsi soulever les goupilles d'étanchéité des sièges d'étanchéité et permettre ainsi l'écoulement de fluide hydronique de la première partie dans la deuxième partie de la soupape de test de pression respective (15) ;
les goupilles d'étanchéité (28, 29) de la première partie (18) et de la deuxième partie (19) de chaque soupape de test de pression (15) sont guidées par des moyens de support (36, 37), ce qui permet un mouvement relatif entre les moyens de support (36, 37) et la goupille d'étanchéité (28, 29) de la partie respective de la soupape de test de pression respective (15).

2. Ensemble de soupape de commande selon la revendication 1, **caractérisé en ce que** les goupilles d'étanchéité (28, 29) de la première partie (18) et de la deuxième partie (19) de chaque soupape de test de pression (15) portent un élément d'étanchéité (34, 35) qui est pressé contre le siège d'étanchéité respectif (32, 33) par l'élément de ressort respectif (30, 31).

3. Ensemble de soupape de commande selon la revendication 1 ou 2, **caractérisé par** un mécanisme de déverrouillage (43) comprenant une poignée (44) et un ressort (45), l'élément de verrouillage (40) pouvant être libéré en déplaçant ladite poignée (44) à l'encontre de la force de ressort dudit ressort (45), pour ainsi permettre de déconnecter la première partie (18) et la deuxième partie (19).

4. Ensemble de soupape de commande selon l'une quelconque des revendications 1 à 3, **caractérisé en ce que** les cavités (26, 27) et les goupilles d'étanchéité (28, 29) des parties (18, 19) ont un profil ou une forme lisse.

5. Ensemble de soupape de commande selon l'une quelconque des revendications 1 à 4, **caractérisé en ce qu'**une différence entre un diamètre intérieur des cavités (26, 27) et un diamètre extérieur des goupilles d'étanchéité (28, 29) est supérieur à la dimension des particules qui peuvent être contenues dans le milieu hydronique.

6. Ensemble de soupape de commande selon la revendication 5, **caractérisé en ce que** la différence entre le diamètre intérieur des cavités (26, 27) et le diamètre extérieur des goupilles d'étanchéité (28, 29) est supérieur à 0,2 mm.
